# EUROPÄISCHE PATENTSCHRIFT

(11) **EP 1 880 927 B1**
(45) Veröffentlichungstag und Bekanntmachung des Hinweises auf die Patenterteilung: **29.09.2010**
(21) Anmeldenummer: 07013556.1
(22) Anmeldetag: 11.07.2007
(51) Int. Cl.: B62D 25/14

(54) **Kraftfahrzeug mit einem Cockpitmodul**
Motor vehicle with a cockpit module
Véhicule automobile doté d'un module de cockpit

(30) Priorität: 20.07.2006 DE 102006033557
(43) Veröffentlichungstag der Anmeldung: 23.01.2008
(73) Patentinhaber: Bayerische Motoren Werke Aktiengesellschaft, 80809 München (DE)
(72) Erfinder: Stemp, Norbert, 82223 Eichenau (DE)

(56) Entgegenhaltungen:
- EP-A- 0 858 943
- EP-A- 1 380 494
- EP-A- 1 852 333
- WO-A-01/85529
- DE-A1- 4 134 436
- DE-A1-102004 026 876

## Beschreibung

Die Erfindung betrifft ein Kraftfahrzeug mit einem Cockpitmodul nach dem Oberbegriff des Patentanspruchs 1.

Im Kraftfahrzeugbau gibt es seit vielen Jahren Bestrebungen, einzelne Bauteile vorab zu Modulen zusammen zu bauen. Diese vormontierten Module werden dann an die eigentliche Montagelinie des Kraftfahrzeugs angeliefert und dort verbaut.

Aus der gattungsgemäßen DE 41 34 436 A1 ist ein Cockpitmodul bekannt, das ein Tragrohr, eine Armaturentafel sowie ein Heiz- oder Klimagerät umfasst. Dabei dient das Tragrohr quasi als Cockpitträger, an dem die anderen Teile, wie die Armaturentafel angebaut sind. Das Tragrohr erstreckt sich über die gesamte Breite des Cockpitmoduls. Bei der Montage des Cockpitmoduls in der Kraftfahrzeugkarosserie wird das Tragrohr mit seinen Enden jeweils mit den A-Säulen der Kraftfahrzeugkarosserie verbunden. Für eine ausreichend steife Befestigung des Cockpitmoduls reichen diese beiden Befestigungen aber nicht aus. Daher ist das Cockpitmodul zusätzlich mit dem unteren Windlauf der Kraftfahrzeugkarosserie verbunden. Der untere Windlauf ist ein Querträger im oberen Bereich der Stirnwand, der sich wie auch das Tragrohr zwischen den beiden A-Säulen erstreckt. Er bildet üblicherweise zugleich die untere Begrenzung der Windschutzscheibe. Zur Befestigung des Cockpitmoduls am unteren Windlauf sind an diesem Zentrierdorne angebracht, über die entsprechende Aufnahmen im Cockpitmodul beim Einführen des Cockpitmoduls in die Fahrzeugkarosserie passgenau geschoben werden.

Aufgabe der Erfindung ist es, ein Kraftfahrzeug mit einem Cockpitmodul zu schaffen, das auf einfache Weise mit der Karosserie des Kraftfahrzeugs verbindbar ist und bei dem die Verschraubung vor Korrosion geschützt wird.

Diese Aufgabe wird mit einem Kraftfahrzeug mit einem Cockpitmodul mit den Merkmalen des Patentanspruchs 1 gelöst.

Erfindungsgemäß weist ein Kraftfahrzeug ein Cockpitmodul auf, das zumindest aus einem Tragrohr und einer damit verbundenen Armaturentafel besteht. Die seitlichen Enden des Tragrohrs sind mit den A-Säulen der Fahrzeugkarosserie verbunden, und es ist zumindest eine Befestigung des Cockpitmoduls mit dem unteren Windlauf der Fahrzeugkarosserie vorgesehen wobei der Windlauf ein Querträger im oberen Bereich einer Stirnwand ist und zugleich die untere Begrenzung einer Frontscheibe bildet. Diese zumindest eine Befestigung ist als Verschraubung ausgeführt. Gegenüber der aus dem Stand der Technik bekannten Befestigung mittels Zentrierdornen und entsprechenden Aufnahmen hat eine Verschraubung den Vorteil, dass sie eine feste Verbindung in allen drei Raumrichtungen darstellt, die auf einfache Weise erzeugt werden kann.

Eine Schwierigkeit dabei stellt die Zugänglichkeit der Verschraubung dar, da die Armaturentafel sich vor der Schraubstelle befindet. Daher erfolgt die Verschraubung vom unteren Windlauf her: Die Schraube wird mit ihrem Schaft durch ein Loch im unteren Windlauf hindurch gesteckt und in das Cockpitmodul hineingeschraubt. Der Kopf der Schraube liegt dabei um das Loch herum am unteren Windlauf an. So kann das Cockpitmodul auf einfache Weise verschraubt werden, obwohl die Armaturentafel von der Fahrgastzelle aus die Verschraubungsstelle verdeckt. Am Cockpitmodul können alle Anbauteile bereits angebracht sein, da keine Verschraubungsstelle mehr von der Fahrgastzelle aus zugänglich sein muss wobei sich die Verschraubungsstelle oberhalb einer Klebefläche für eine Frontscheibe am unteren Windlauf befindet.

Üblicherweise ist der untere Windlauf als Hohlprofil ausgeführt. Das Hohlprofil kann beispielsweise ein IHU-umgeformter Träger sein oder in Schalenbauweise aus zwei Blechschalen gebildet sein. Vorteilhafterweise weist dabei der untere Windlauf auf der dem Cockpitmodul abgewandten Seite im Bereich der Verschraubung eine kleine Aussparung auf, durch die eine Schraube vollständig hindurch passt. Dadurch erfolgt die Verschraubung nicht durch den kompletten unteren Windlauf hindurch, sondern nur eine Wand des unteren Windlaufs wird mit dem Cockpitträger verschraubt. Dabei befinden sich die Verschraubungsstellen günstigerweise und erfindungsgemäß oberhalb der Klebefläche der Frontscheibe und somit im Fahrzeuginnenraum. Bevorzugt ist die Aussparung mit einem Stopfen mit akustischer Dämpfungswirkung verschließbar. Auf diese Weise kann verhindert werden, dass Schmutz und / oder Feuchtigkeit durch die Aussparung in den unteren Windlauf eintreten und dort gegebenenfalls zu Korrosion führen kann.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine perspektivische Darstellung eines in einer Kraftfahrzeugkarosserie verbauten Cockpitmoduls, wobei die Armaturentafel nicht dargestellt ist, und
- Fig. 2: eine leicht perspektivische Seitenansicht zur Darstellung der Befestigung des in Fig. 1 dargestellten Cockpitmoduls an der Kraftfahrzeugkarosserie.

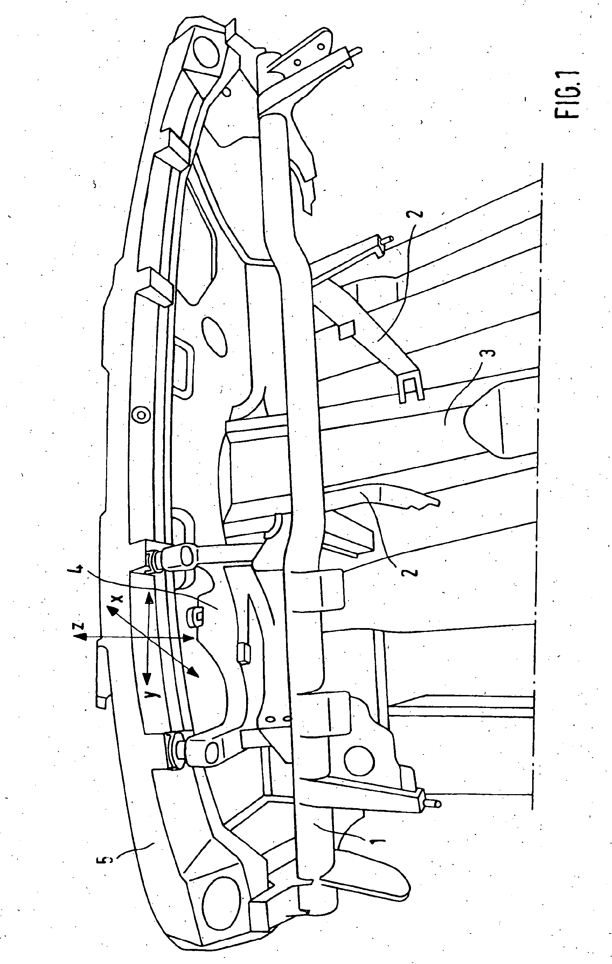

In Fig. 1 ist ein Cockpitmodul in einer Fahrgastzelle einer Karosserie eines Personenkraftfahrzeugs gezeigt. Das Cockpitmodul besteht aus einem eingezeichneten Tragrohr 1 und einer daran angebrachten Armaturentafel, die hier nicht dargestellt ist, da sie den Blick auf die wesentlichen Details verdecken würde. Das Tragrohr 1 erstreckt sich über die gesamte Breite des Cockpitmoduls und ist beidseitig mit seinen freien Enden an der Karosserie befestigt. Zusätzlich sind mit dem Tragrohr 1 zwei Abstützungen 2 verbunden, die das Tragrohr 1 im mittleren Bereich am Kardantunnel 3 abstützen. Damit ist das Cockpitmodul in Fahrzeugquerrichtung y und in der Höhenrichtung z bereits sicher mit der Karosserie verbunden. Um auch in der Fahrzeuglängsrichtung x die erforderliche steife Verbindung zu gewährleisten, ist am Tragrohr 1 ein Halter 4 angebracht, der sich wiederum an der Stirnwand und am unteren Windlauf 5 der Karosserie in Fahrzeuglängsrichtung abstützt, und mit der Stirnwand und mit dem unteren Windlauf 5 verschraubt ist.

Die Verschraubungsstellen zwischen dem Halter 4 und dem unteren Windlauf 5 und der Stirnwand sind von der Fahrgastzelle aus nicht zugänglich, weil sie von der Armaturentafel verdeckt sind, die integraler Bestandteil des Cockpitmoduls ist. Daher sind die Verschraubungen vom Vorderwagen der Karosserie her in das Cockpitmodul hinein ausgeführt: Die Schrauben werden also vom Vorderwagen her mit ihrem Schaft durch ein Durchgangsloch im unteren Windlauf bzw. in der Stirnwand hindurch gesteckt und in das Cockpitmodul hinein geschraubt. Der Kopf der Schrauben liegt dabei am Rand der Durchgangslöcher an.

Die Verschraubung zwischen dem unteren Windlauf und dem Cockpitmodul stellt eine sichere Verbindung dar. Die aus der DE 41 34 436 A1 bereits bekannte Lösung mit Zentrierdornen am unteren Windlauf und entsprechenden Aufnahmen im Cockpitmodul kann nur in maximal zwei Richtungen eine Verbindung gewährleisten, die nicht oder nur geringfügig die Steifigkeit des montierten Cockpitmoduls erhöht.

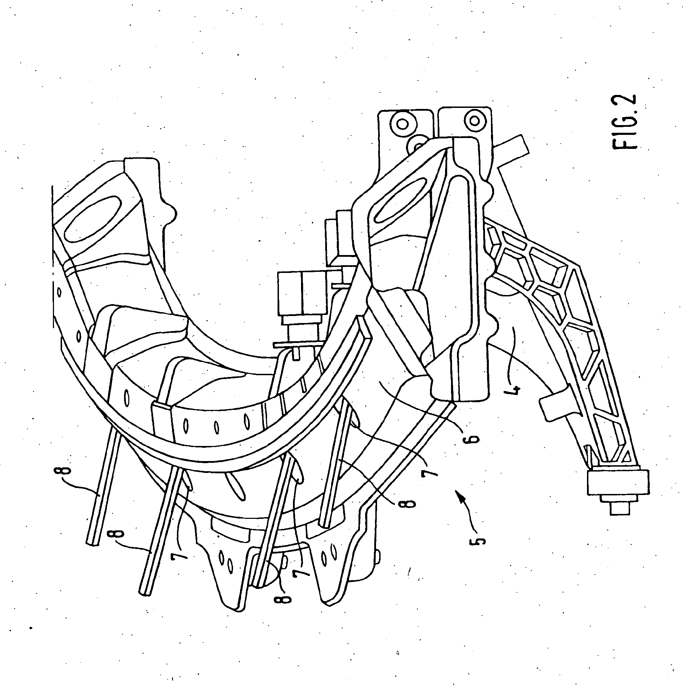

In der in Fig. 2 gezeigten perspektivischen Seitenansicht ist der Aufbau des unteren Windlaufs 5 gut erkennbar. Dieser ist ein Hohlträger, der aus zwei Blechschalen in Schalenbauweise zusammengesetzt ist. Er weist eine schräge vordere Fläche 6 auf, die im unteren Bereich zur Verklebung der Frontscheibe dient. Knapp oberhalb des Verklebebereichs dieser vorderen Fläche befinden sich mehrere Aussparungen 7, die so groß sind, dass ein Schraubwerkzeug 8 und eine Schraube mit Unterlegscheibe hindurch passen. Auf der im Querschnitt der vorderen Fläche 6 gegenüberliegenden Seite des unteren Windlaufs 5 befindet sich jeweils den Aussparungen 7 gegenüberliegend jeweils ein Durchgangsloch, durch das der Schaft der Schrauben hindurch passt. Zum Verschrauben des Cockpitmoduls mit dem unteren Windlauf 5 nun wird jeweils ein Schraubwerkzeug 8 zusammen mit einer Schraube und einer Unterlegscheibe durch jede Aussparung 7 auf der Fahrerseite hindurch geführt, sodass der Schaft der Schraube genau das der Aussparung 7 gegenüberliegende Durchgangsloch trifft. Anschließend wird die Schraube mittels dem Schraubwerkzeug 8 mit dem Schaft in den am unteren Windlauf 5 anliegenden Halter 4 hineingeschraubt, bis der Kopf der Schraube am Rand des Durchgangslochs anliegt. Nachdem der Schraubvorgang beendet ist, kann das Schraubwerkzeug 8 wieder herausgefahren werden. Die Aussparungen 7 werden mittels Akustikstopfen geschlossen. Zur Verbesserung der akustischen Wirkung des unteren Windlaufs 5 kann dieser zudem über eine Öffnung in der schrägen, vorderen Fläche 6 ausgeschäumt werden. Anschließend kann die Frontscheibe eingeklebt werden.

Die Montage eines vollständig vormontierten Cockpitmoduls hat gegenüber einer separaten Montage des Tragrohrs 1 und der einzelnen Komponenten der Armaturentafel mehrere Vorteile: So kann das gesamte Cockpitmodul vor der Montage in das Fahrzeug bereits bezüglich zahlreicher Funktionalitäten getestet und überprüft werden. Die Armaturentafel weist bezüglich vieler einzelnen Baugruppen, wie beispielsweise bezüglich des Defrosterkanals wesentlich höhere Gestaltungsfreiheiten auf, da die Gestaltung nicht mehr aufgrund der sehr begrenzten Montagemöglichkeiten im Fahrzeug erheblich eingeschränkt ist. Die Montage des Cockpitmoduls benötigt wesentlich weniger Montagezeit, als die separate Montage der einzelnen Komponenten. Die Verschraubung mit dem unteren Windlauf 5 ermöglicht eine sichere Befestigung, die nur sehr wenig Bauraum benötigt.

Durch die Schraubmontage von Abstützungen für eine Lenksäule oder andere Cockpitbauteile ist in der Endmontage des Kraftfahrzeugs eine einheitliche Karosserie sowohl für links- als auch für rechtsgesteuerte Kraftfahrzeuge einsetzbar. Bei einer Demontage des Cockpits kann der Halter 4 im Fahrzeug verbleiben, da eine weitere Schnittstelle zum Tragrohr 1 gelöst werden kann.

## Patentansprüche

1. Kraftfahrzeug mit einem Cockpitmodul, das zumindest aus einem Tragrohr (1) und einer damit verbundenen Armaturentafel besteht, wobei die seitlichen Enden des Tragrohrs (1) mit den A-Säulen der Fahrzeugkarosserie verbunden sind, und zumindest eine Befestigung des Cockpitmoduls mit einem unteren Windlauf (5) der Fahrzeugkarosserie vorgesehen ist, der ein Querträger im oberen Bereich einer Stirnwand ist und zugleich die untere Begrenzung einer Frontscheibe bildet, wobei zumindest diese eine Befestigung des Cockpitmoduls als Verschraubung ausgeführt ist, **dadurch gekennzeichnet, dass** zur Verschraubung der Schaft einer Schraube durch ein Durchgangsloch im unteren Windlauf (5) hindurchragt und in das Cockpitmodul eingeschraubt ist, während der Kopf der Schraube am unteren Windlauf (5) um das Durchgangsloch herum anliegt, wobei sich die Verschraubungsstelle oberhalb einer Klebefläche für eine Frontscheibe am unteren Windlauf (5) befindet.

2. Kraftfahrzeug nach Anspruch 1, **dadurch gekennzeichnet, dass** der untere Windlauf (5) als Hohlprofil ausgeführt ist.

3. Kraftfahrzeug nach Anspruch 2, **dadurch gekennzeichnet, dass** der untere Windlauf (5) auf der-dem Cockpitmodul abgewandten Seite im Bereich der Verschraubung zumindest eine kleine Aussparung (7) aufweist, durch die eine Schraube vollständig hindurch passt.

4. Kraftfahrzeug nach Anspruch 3, **dadurch gekennzeichnet, dass** die Aussparung (7) mit einem Stopfen verschließbar ist.

## Claims

1. A motor vehicle with a cockpit module, which comprises at least a support tube (1) and a dashboard connected thereto, the side ends of the support tube (1) being connected to the A-pillars of the vehicle body, and at least one fastening of the cockpit module to a lower cowl (5) of the vehicle body being provided, which is a crossbeam in the upper region of an end wall and simultaneously forms the lower limitation of a windscreen, at least this one fastening of the cockpit module being configured as a screw connection, **characterised in that** for the screw connection, the shank of a screw projects through a through-hole in the lower cowl (5) and is screwed into the cockpit module, while the head of the screw rests on the lower cowl (5) around the through-hole, the screw connection point being located above an adhesive face for a windscreen at the lower cowl (5).

2. A motor vehicle according to claim 1, **characterised in that** the lower cowl (5) is configured as a hollow profile.

3. A motor vehicle according to claim 2, **characterised in that** the lower cowl (5), on the side remote from the cockpit module in the region of the screw connection, has at least one small recess (7), through which a screw passes completely.

4. A motor vehicle according to claim 3, **characterised in that** the recess (7) can be closed with a plug.

## Revendications

1. Véhicule automobile équipé d'un module de cockpit composé d'au moins un tube de support (1) auquel est relié le tableau de bord,
les extrémités latérales du tube de support (1) étant reliées aux colonnes A de la carrosserie du véhicule et au moins une fixation du module de cockpit est prévue avec le tablier inférieur (5) de la carrosserie, qui est une traverse dans la zone supérieure d'une paroi frontale et en même temps forme la limite inférieure du pare-brise,
au moins cette fixation du module de cockpit, étant réalisée par une liaison vissée,
véhicule **caractérisé en ce que**
pour visser la tige, le corps d'une vis traverse un passage du tablier inférieur (5) et se visse dans le module de cockpit alors que la tête de la vis s'applique autour du passage dans le tablier inférieur (5),
le point de vissage se trouvant au-dessus d'une surface collée du pare-brise sur le tablier inférieur (5).

2. Véhicule automobile selon la revendication 1,
**caractérisé en ce que**
le tablier inférieur (5) est réalisé sous la forme d'un profil creux.

3. Véhicule automobile selon la revendication 2,
**caractérisé en ce que**
le tablier inférieur (5) comporte au moins un petit dégagement (7) traversé complètement par la vis sur le côté non tourné vers le module de cockpit, dans la zone du vissage.

4. Véhicule automobile selon la revendication 3,
**caractérisé en ce que**
le dégagement (7) est fermé par un bouchon.
